# EUROPÄISCHE PATENTSCHRIFT

(11) **EP 1 645 757 B1**
(45) Veröffentlichungstag und Bekanntmachung des Hinweises auf die Patenterteilung: **15.08.2007**
(21) Anmeldenummer: 05108950.6
(22) Anmeldetag: 28.09.2005
(51) Int. Cl.: F16B 13/02, E04B 1/48

(54) **Ankerelement**
Anchor element
Élément d'ancrage

(30) Priorität: 11.10.2004 DE 102004049489
(43) Veröffentlichungstag der Anmeldung: 12.04.2006
(73) Patentinhaber: HILTI Aktiengesellschaft, 9494 Schaan (LI)
(72) Erfinder: Wieser, Jürgen, 86916, Kaufering (DE); Ayrle, Thomas, 86836, Obermeitingen (DE)
(74) Vertreter: Wildi, Roland

(56) Entgegenhaltungen:
- EP-A- 1 176 321
- EP-A- 1 367 265
- DE-A1- 3 130 787

## Beschreibung

Die vorliegende Erfindung betrifft ein Ankerelement zur Verankerung als Verbundanker in einem Bohrloch in einem Untergrund, der im Oberbegriff des Patentanspruchs 1 genannten Art. Ein solches Ankerelement ist aus der EP 1 176 321 A1 bekannt.

Aus der EP 1 176 321 A1 ist ein Ankerelement mit einer über eine Verbund- oder Mörtelmasse in einem Bohrloch verankerbaren Ankerstange bekannt, an deren einführseitiger Spitze eine Gewindehülse aufgeschraubt ist, die ein grobgängiges Aussengewinde trägt. Dieses Aussengewinde überragt ein Gewinde der Ankerstange und weist einen anderen Drehsinn auf. Das Aussengewinde an der Gewindehülse dient dabei der Aufrauung einer Innenwandung des Bohrlochs, um den Verbund zwischen der Innenwandung des Bohrlochs und der Mörtelmasse nach deren Aushärtung zu verbessern.

Von Nachteil hierbei ist, dass dieses Ankerelement nur mit in Patronen befindlichen Verbundmassen verwendbar ist, die vor dem Setzen der Ankerstange in das Bohrloch eingeführt werden müssen. Ferner ist ein derartiges Ankerelement vor dem Aushärten der Verbundmasse nicht belastbar.

Aus der EP 1 367 265 A1 ist ein Kunststoffdübel mit einem Schaft und mit einem zwischen dem Schaft und einem Dübelende angeordneten Spreizbereich bekannt. Der Spreizbereich ist mit Schlitzen versehen, die das Spreizen des Spreizbereichs beim Setzen des Befestigungsmittels ermöglichen. Aussen am Schaft sind ferner mehrere Stege spiralförmig angeordnet.

Aus der DE 31 30 787 A1 ist ein Formschlussdübel bekannt, der einen ein Innengewinde für eine Befestigungsschraube aufweisenden Dübelkörper umfasst. Der Dübelkörper ist mit in axialer Richtung wirkenden Formschlusselementen versehen, die durch radial abstehende Wendel und durch zwei vorzugsweise in axialer Richtung in den Dübelkörper einschiebbare und von dessen Oberfläche radial abstehende Verdrehsicherungsleisten gebildet sind.

Die Aufgabe der vorliegenden Erfindung liegt daher darin, ein Ankerelement der vorgenannten Art zu entwickeln, das die vorgenannten Nachteile vermeidet. Dieses wird erfindungsgemäss durch die in Anspruch 1 genannten Massnahmen erreicht.

Demnach liegt die Besonderheit des erfindungsgemässen Ankerelements darin, dass aussen an dem Hülsenteil wenigstens bereichsweise grobe Steilgewindeabschnitte ausgebildet sind, und dass das Hülsenteil an einem der Aufnahme für das stangenförmige Ankerteil abgewandten vorderen Ende wenigstens eine seitliche Öffnung aufweist. Hierdurch wird zum einen erreicht, dass das Ankerelement bereits nach dem Setzvorgang in dem Bohrloch durch den Formschluss der Steilgewindeabschnitte mit der Bohrlochwandung mit Teillast belastbar ist. Ferner kann durch eine hohle Ankerstange bzw. ein hohles stangenförmiges Ankerteil

Verbundmasse in das Bohrloch eingebracht werden, die über die vorgesehene wenigstens eine seitliche Öffnung an dem Hülsenteil in das Bohrloch austritt. Dieses Einbringen kann erfolgen, ohne dass das Ankerelement durch den Austrittsdruck der Mörtelmasse wieder aus dem Bohrloch hinausbewegt wird, da das Ankerelement über den Formschluss der Steilgewindeabschnitte mit der Bohrlochwandung dort fixiert ist. Es braucht keine Patrone mit Verbundmasse oder Mörtel mehr vor dem Setzvorgang in das Bohrloch eingebracht werden. Gute Haltewerte ergeben sich dadurch, dass die Steilgewindeabschnitte einen Steigungswinkel zwischen 35° und 85° aufweisen.>

Für ein optimales Furchverhalten ist es günstig, wenn die Steilgewindeabschnitte eine Gewinde- bzw. Profilhöhe von wenigstens 2 mm über einer Aussenmantelfläche des Hülsenteils aufweisen.

Eine günstige Geometrie des Hülsenteils ergibt sich, wenn die Steilgewindeabschnitte an zwei im Wesentlichen parallel zu einer Längsachse des Hülsenteils verlaufenden Bereichen angeordnet sind. Diese Bereiche können alternieren mit achsparallelen Bereichen, an denen z. B. Vorsprünge angeordnet sind, die die Verteilung der Verbundmasse unterstützen und die weniger hoch ausgebildet sind, als die Steilgewindeabschnitte. Diese Vorsprünge können z. B. als in Setzrichtung keilförmige Rippen ausgebildet sein.

Vorteilhaft ist die wenigstens eine seitliche Öffnung durch einen im vorderen, der Aufnahme abgewandten Ende des Hülsenteils angeordneten Schlitz erzeugt, der zu einem Kanal im Hülsenteil hin offen ist. Durch diese Massnahme kann die oder jede Öffnung auf einfache Weise z. B. direkt bei einem Temperguss des Hülsenteils erzeugt werden. Ein nachträgliches Einbohren der Öffnung/Öffnungen ist nicht notwendig.

Von Vorteil ist es ferner, wenn aussen an dem Hülsenteil parallel zur Längsachse verlaufende Vorsprünge angeordnet sind, die in Eindrehrichtung der Steilgewindeabschnitte keilförmig abgeschrägt sind. Hierdurch kann ein Ausdrehen des Hülsenteils bzw. des Ankerelementes nach dem Setzvorgang verhindert werden.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

### Es zeigen:

- Fig. 1: ein erfindungsgemässes Ankerelement mit in einem Hülsenteil eingeschraubtem stangenförmigen Ankerteil in Seitenansicht,
- Fig. 2: das Hülsenteil des Ankerelements in einem Längsschnitt gemäss der Linie II - II aus Figur 1,

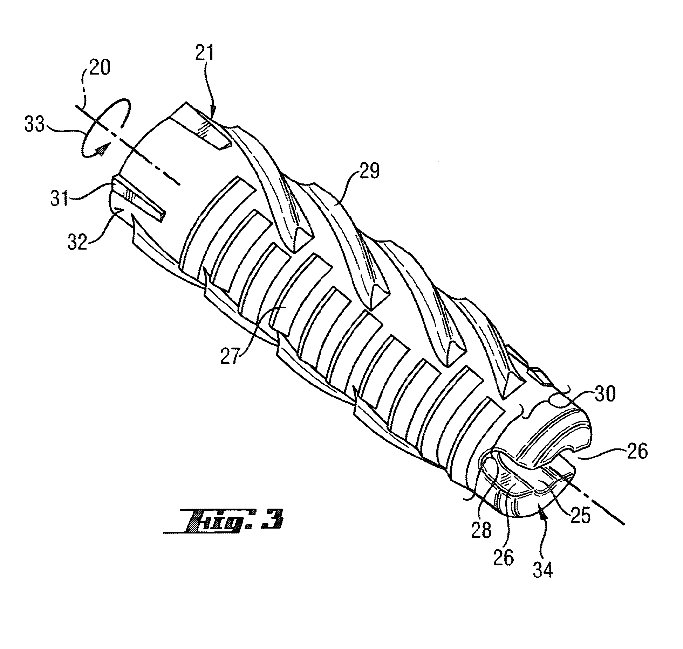

- Fig. 3: das Hülsenteil in perspektivischer Ansicht.

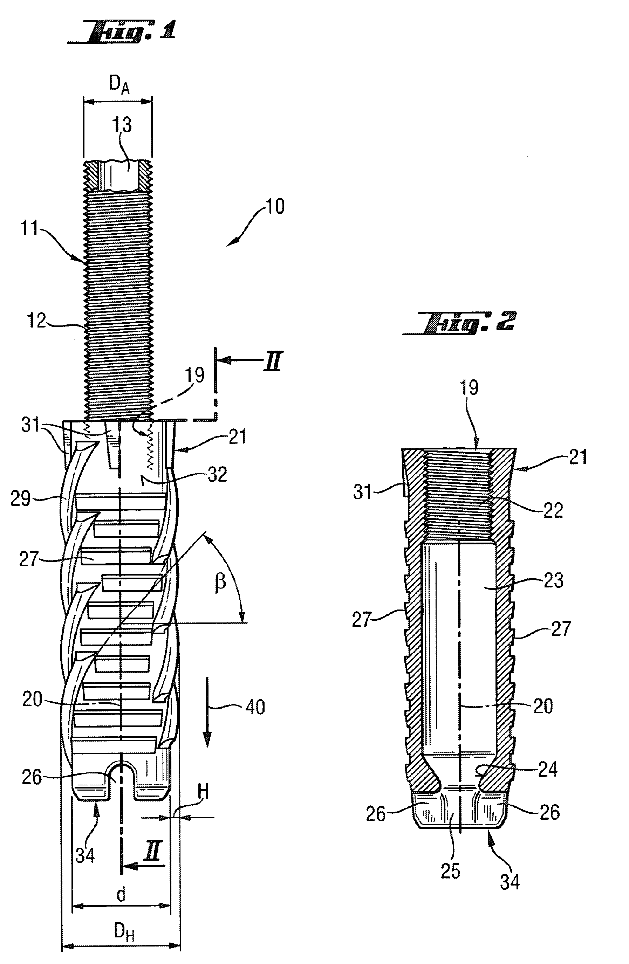

In den Figuren ist beispielhaft eine Ausführungsform des erfindungsgemässen Ankerelements 10 dargestellt. Das Ankerelement 10 weist ein stangenförmiges Ankerteil 11, an dem wenigstens abschnittsweise ein Gewinde 12 angeordnet ist, und ein Hülsenteil 21 auf. Das Hülsenteil 21 weist an seinem einen Ende eine mit einem Innengewinde 22 versehene Aufnahme 19 für das stangenförmige Ankerteil 11 auf, welches in Fig. 1 mit seinem Gewinde 12 in diese Aufnahme 19 eingeschraubt ist. Das stangenförmige Ankerteil 11 kann dabei maximal bis zu einem in einem Kanal 23 in der Hülse 21 angeordneten Anschlag 24 in die Hülse 21 eingeschraubt sein.

Aussen an dem Hülsenteil 21 sind zwei, im Wesentlichen parallel zur Längsachse 20 des Hülsenteils verlaufende Bereiche 28 mit Vorsprüngen 27 angeordnet die mit zwei ebenfalls parallel zur Längsachse 20 des Hülsenteils verlaufenden Bereichen 30 mit groben Steilgewindeabschnitten 29 alternieren. Die Vorsprünge 27 sind dabei als Quer zur Längsache 20 verlaufende, keilförmige Rippen ausgebildet, die in Setzrichtung 40 des Ankerelements 10 angeschrägt sind.

Die als Gewinderippen ausgebildeten Steilgewindeabschnitte 29 weisen hier eine Steigung mit einem Steigungswinkel β = 50° auf. Dabei ist β definiert über die dem Fachmann allgemein bekannte Formel: tan β = Pₕ/(Πd) bei der Pₕ die Steigung der Gewindeprofilierung und d der Durchmesser des Hülsenteils 21 ist. Die Steigung kann aber auch einen anderen Steigungswinkel β zwischen 35° und 85° aufweisen, der ebenfalls als günstig angesehen wird. Die Gewindehöhe H der Steilgewindeabschnitte 29 über der Aussenmantelfläche 32 des Hülsenteils 21 ist vorzugsweise ≥ 2 mm. Die Flankenwinkel der Gewinderippen bzw. der Steilgewindeabschnitte 29 liegen vorzugsweise zwischen 25° und 90°.

Wird das Ankerelement 10 mit dem Hülsenteil 21 vorneweg in Setzrichtung 40 in ein Bohrloch eingetrieben, welches einen Durchmesser aufweist, der kleiner ist, als die Weite bzw. der Durchmesser D_{H} des Hülsenteils 21 zwischen zwei sich gegenüberliegenden Steilgewindeabschnitten 29, und der zumindest grösser ist als der Durchmesser D_{A} des stangenförmigen Ankerteils 11, dann wird die Bohrlochwand über die Steilgewindeabschnitte 29 gefurcht, so dass ein Formschluss erzielt wird. Hierdurch können bereits vor dem Einbringen und Aushärten der Verbundmasse Haltekräfte erreicht werden, die eine Teilbelastung des Ankerelements 10 direkt nach dem Eintreibvorgang erlauben.

Im Bereich der Aufnahme 19 sind aussen an dem Hülsenteil 21 in Eindrehrichtung 33 der Steilgewindeabschnitte 29 keilförmig abgeschrägte, parallel zur Längsachse 20 verlaufende Vorsprünge 31 bzw. Rippen angeordnet. Diese Vorsprünge 31 bremsen den Setzvorgang und sperren das Hülsenteil 21 gegen ausdrehen. Die Vorsprünge 31 können ebenfalls an anderen, als den angegebenen Stellen, an dem Hülsenteil angeordnet sein.

An dem in Setzrichtung 40 liegenden vorderen Ende 34 des Hülsenteils 21 ist ein zum Kanal 23 offener Schlitz 25 angeordnet, der seitlich in zwei Öffnungen 26 in der Mantelfläche des Hülsenteils 21 mündet.

Nach dem Setzen des Ankerelements 10 kann durch den Kanal 13 in dem stangenförmigen Ankerteil 11 und dem sich daran anschliessenden Kanal 23 im Hülsenteil 21 Verbundmasse über die Öffnungen 26 in den Zwischenraum zwischen Bohrlochinnenwand und dem Ankerelement 10 eingebracht werden, bis die Verbundmasse an der Oberfläche des Untergrundes in den das Bohrloch eingebracht wurde wieder austritt. Die als keilförmige Rippen ausgebildeten Vorsprünge 27 verbessern dabei die Verteilung der Verbundmasse und erhöhen die Verbundhaftung des Ankerelements 10. Das Einführen einer Patrone mit Verbundmasse in das Bohrloch vor dem Setzen des Ankerelements 10 ist demnach nicht mehr notwendig. Nach dem Aushärten der Verbundmasse ist das Ankerelement 10 auch stoffschlüssig mit der angestrebten Endfestigkeit in dem Bohrloch verankert, wobei ein Lastangriffsteil des stangenförmigen Ankerteils 11 aus dem Bohrloch herausragen kann.

Das Hülsenteil 21 kann z. B. als Tempergussteil ausgeführt sein, bei dem das Innengewinde 22, die Vorsprünge 27, 31 und die Steilgewindeabschnitte 29 bereits im Gussvorgang erzeugt wurden, so dass eine kostengünstige Herstellung des Hülsenteils möglich ist.

## Patentansprüche

1. Ankerelement, zur Verankerung in einer Aufnahmebohrung mittels einer Verbundmasse,
mit einem stangenförmigen Ankerteil (11) und einem mit diesem verbindbaren Hülsenteil (21), wobei das Hülsenteil (21) an einem Ende eine Aufnahme (19) für das stangenförmige Ankerteil (11) aufweist,
**dadurch gekennzeichnet,**
**dass** aussen an dem Hülsenteil (21) wenigstens bereichsweise grobe Steilgewindeabschnitte (29) ausgebildet sind, die einen Steigungswinkel (β) zwischen 35° und 85° aufweisen, und dass das Hülsenteil (21) an einem der Aufnahme (19) abgewandten vorderen Ende (34) wenigstens eine seitliche Öffnung (26) aufweist.

2. Ankerelement, nach Anspruch 1, **dadurch gekennzeichnet, dass** die Steilgewindeabschnitte (29) eine Gewindehöhe (H) von wenigstens 2 mm über einer Aussenmantelfläche (32) des Hülsenteils (21) aufweisen.

3. Ankerelement, nach einem der Ansprüche 1 bis 2, **dadurch gekennzeichnet, dass** die Steilgewindeabschnitte (29) an zwei im Wesentlichen parallel zu einer Längsachse (20) des Hülsenteils (21) verlaufenden Bereichen (30) angeordnet sind.

4. Ankerelement, nach einem der Ansprüche 1 bis 3, **dadurch gekennzeichnet, dass** die wenigstens eine seitliche Öffnung (26) durch einen im vorderen Ende (34) des Hülsenteils (21) angeordneten Schlitz (25) erzeugt wird, der zu einem Kanal (23) im Hülsenteil (21) hin offen ist.

5. Ankerelement, nach einem der Ansprüche 1 bis 4, **dadurch gekennzeichnet, dass** aussen an dem Hülsenteil (21) parallel zur Längsachse (20) verlaufende Vorsprünge (31) angeordnet sind, die in Eindrehrichtung (33) der Steilgewindeabschnitte (29) keilförmig abgeschrägt sind.

## Claims

1. Anchor element for anchoring in a receiving bore by means of a bonding composition, comprising a rod-shaped anchor part (11) and a sleeve part (21) connectable thereto, the sleeve part (21) having at one end a receptacle (19) for the rod-shaped anchor part (11), **characterised in that** coarse steep thread sections (29) having a helix angle (β) from 35° to 85° are formed at least zonally on the outside of the sleeve part (21) , and **in that** the sleeve part (21) has at least one lateral opening (26) on a leading end (34) oriented away from the receptacle (19).

2. Anchor element according to claim 1, **characterised in that** the steep thread sections (29) have a thread height (H) of at least 2 mm above an external cylindrical surface (32) of the sleeve part (21).

3. Anchor element according to either of claims 1 and 2, **characterised in that** the steep thread sections (29) are arranged on two zones (30) disposed substantially parallel to a longitudinal axis (20) of the sleeve part (21).

4. Anchor element according to any one of claims 1 to 3, **characterised in that** the at least one lateral opening (26) is produced by a slot (25) arranged in the leading end (34) of the sleeve part (21), which slot (25) is open to a passage (23) in the sleeve part (21).

5. Anchor element according to any one of claims 1 to 4, **characterised in that** projections (31), which are chamfered to taper inwards in the insertion direction (33) of the steep thread sections (29), are arranged on the outside of the sleeve part (21) parallel to the longitudinal axis (20).

## Revendications

1. Élément d'ancrage à ancrer dans un trou récepteur au moyen d'un produit composite, comprenant une partie d'ancrage en forme de tige (11) et une partie de manchon (21) pouvant être reliée à celle-ci, la partie de manchon (21) comportant à une extrémité un logement (19) pour la partie d'ancrage en forme de tige (11), **caractérisé en ce que** sur la partie de manchon (21) sont prévues extérieurement, au moins par endroits, des portions filetées à pas grossier et rapide (29) qui présentent un angle d'inclinaison (β) compris entre 35° et 85°, et **en ce que** la partie de manchon (21) est pourvue d'au moins une ouverture latérale (26) à son extrémité avant (34) orientée à l'opposé du logement (19).

2. Élément d'ancrage selon la revendication 1, **caractérisé en ce que** les portions filetées à pas rapide (29) présentent une hauteur de filetage (H) d'au moins 2 mm au-dessus d'une surface périphérique extérieure (32) de la partie de manchon (21).

3. Élément d'ancrage selon une des revendications 1 à 2, **caractérisé en ce que** les portions filetées à pas rapide (29) sont disposées dans deux zones (30) qui s'étendent sensiblement parallèlement à l'axe longitudinal (20) de la partie de manchon (21).

4. Élément d'ancrage selon une des revendications 1 à 3, **caractérisé en ce que** l'ouverture latérale au nombre d'au moins une (26) prend la forme d'une fente (25) qui est ménagée dans l'extrémité avant (34) de la partie de manchon (21) et qui s'ouvre sur un canal (23) de la partie de manchon (21).

5. Élément d'ancrage selon une des revendications 1 à 4, **caractérisé en ce que** des saillies (31) parallèles à l'axe longitudinal (20) et biseautées en forme de coins dans la direction d'enfoncement (33) des portions filetées à pas rapide (29) sont disposées extérieurement sur la partie de manchon (21).
